# EUROPÄISCHE PATENTSCHRIFT

(11) **EP 2 032 978 B1**
(45) Veröffentlichungstag und Bekanntmachung des Hinweises auf die Patenterteilung: **29.01.2014**
(21) Anmeldenummer: 07729709.1
(22) Anmeldetag: 31.05.2007
(51) Int. Cl.: G01N 29/06, G01N 29/22, G01N 29/26

(54) **ULTRASCHALL-PRÜFGERÄT MIT ARRAY-PRÜFKÖPFEN**
ULTRASOUND TEST DEVICE WITH ARRAY TEST BODIES
APPAREIL DE CONTRÔLE ULTRASONORE MUNI DE TÊTES DE CONTRÔLE À RÉSEAU

(30) Priorität: 14.06.2006 DE 102006027956
(43) Veröffentlichungstag der Anmeldung: 11.03.2009
(73) Patentinhaber: GE Inspection Technologies GmbH, 50354 Hürth (DE)
(72) Erfinder: KLEINERT, Wolf-Dietrich, 53125 Bonn (DE)
(74) Vertreter: Kayser, Martin
(86) Internationale Anmeldenummer: PCT/EP2007/055298
(87) Internationale Veröffentlichungsnummer: WO 2007/144271

(56) Entgegenhaltungen:
- WO-A-2004/057325
- DE-A1- 10 259 658
- JP-A- 60 014 166
- US-A- 4 497 210
- BOHN H ET AL: "Apparative developments for in-service inspections of reactor pressure vessels" NUCLEAR ENGINEERING AND DESIGN NETHERLANDS, Bd. 102, Nr. 3, 1987, Seiten 341-355, XP002448121 ISSN: 0029-5493 & BOHN H ET AL: "Proving the capabilities of the phased-array probe/ALOK inspection technique" NUCLEAR ENGINEERING AND DESIGN NETHERLANDS, Bd. 102, Nr. 3, 1987, Seiten 361-368, ISSN: 0029-5493
- BREKOW G ET AL: "SIGNALVERARBEITUNG UND ERGEBNISDARSTELLUNG MIT ULTRASCHALL-GRUPPENSTRAHLERPRUEFKOEPFEN SIGNAL PROCESSING AND PRESENTATION OF RESULTS IN ULTRASONIC TESTING WITH PHASED ARRAY PROBES" MATERIALPRUEFUNG, HANSER, MUENCHEN, DE, Bd. 31, Nr. 10, Oktober 1989 (1989-10), Seiten 311-314, XP009066354 ISSN: 0025-5300
- GROHS B ET AL: "CHARACTERIZATION OF FLAW LOCATION, SHAPE, AND DIMENSIONS WITH THE ALOK SYSTEM" MATERIALS EVALUATION, COLUMBUS, OH, US, Bd. 40, Nr. 1, Januar 1982 (1982-01), Seiten 84-89, XP009030157 ISSN: 0025-5327
- DEUTSCH V ET AL: "3.4 Fehlernachweis und Gerätejustierung" ULTRASCHALLPRUEFUNG: GRUNDLAGEN UND INDUSTRIELLE ANWENDUNGEN, 1997, Seiten 80-133, XP002280036

## Beschreibung

Die Erfindung bezieht sich auf ein Ultraschall-Prüfgerät für eine zerstörungsfreie Prüfung eines Prüfkörpers und ein Verfahren zur Darstellung von Ultraschallsignalen, die mit Hilfe eines Ultraschall-Prüfgeräts gewonnen werden.

Für die zerstörungsfreie Prüfung eines Werkstücks durch Ultraschall sind geeignete Prüfgeräte bekannt. Ganz allgemein verwiesen wird auf das DE-Buch von J. und. H. Krautkrämer, Werkstoffprüfung mit Ultraschall, sechste Auflage.

Es sind insbesondere Winkelprüfköpfe bekannt, die hochfrequente Schallimpulse (ca. 1 - 10 MHz) abgeben, die in das zu prüfende Werkstück eingeschallt werden und die dann einerseits an der Ankoppelfläche reflektiert werden und zum Winkelprüfkopf zurücklaufen und die andererseits in das Werkstück eindringen, wo sie an einer Rückwand des Werkstücks mindestens einmal reflektiert werden. An inneren Inhomogenitäten, wie zum Beispiel an einem Materialfehler, treten Schallreflexionen auf, die vom Winkelprüfkopf wieder empfangen und im Ultraschallgerät verarbeitet werden.

Es wird in der Regel nach dem Impuls-Echoverfahren gearbeitet. Der Winkelprüfkopf, bzw. ein Sender gibt vorzugsweise periodisch Ultraschallimpulse ab und ein Empfänger empfängt danach Echosignale dieser abgegebenen Ultraschallimpulse. Die weiteren Echosignale stammen aus dem Werkstück und insbesondere von der Rückwand des Werkstücks. Insoweit ist das Prüfungsverfahren für Werkstücke geeignet, deren Ankoppelfläche im Wesentlichen parallel zur Rückwand verläuft, so dass es zur Ausbildung mehrerer Hin- und Hergänge des Ultraschallimpulses im Werkstück kommt.

Ein Winkelprüfkopf arbeitet über einen Fuß aus Vorlaufmaterial mit Schrägeinschallung. Die Ultraschallwelle läuft in das Material hinein, bis an einer Grenzfläche eine teilweise oder völlige Reflexion stattfindet. Liegt die reflektierende Fläche senkrecht zur Ausbreitungsrichtung, so wird die Schallwelle in ihre ursprüngliche Richtung reflektiert und erreicht nach einer gewissen Laufzeit wieder einen im Winkelprüfkopf angeordneten piezoelektrischen Schwinger, der sie in einen elektrischen Impuls zurückverwandelt.

Der Winkelprüfkopf wird neben den zu prüfenden Bereich angeordnet und das Schallsignal wird sozusagen seitlich in den relevanten Bereich eingeschallt. Dies ist beispielsweise bei der Ultraschallprüfung von Schweißnähten der Fall.

Bei einem ungestörten Prüfkörper wird der Schall also jeweils zwischen Ankoppelfläche und Rückwand des Prüfkörpers reflektiert und läuft unter einem bestimmten Winkel immer weiter in die vom Winkelprüfkopf wegweisende Richtung in den Prüfkörper hinein.

Bei der Überprüfung von Schweißnähten wird der Winkelprüfkopf entlang der Schweißnaht bewegt, bis ein maximales Fehlerecho entsteht. Die empfangenen Echosignale werden dabei unmittelbar auf dem Monitor dargestellt. Die Darstellung erfolgt allgemein als sogenanntes A-Bild, bei dem über der Zeitachse die Spannungswerte der empfangenen Echosignale dargestellt werden. Bei mehrfachen Hin- und Hergängen zwischen Ankoppelfläche und Rückwand erhält man eine Folge gleichabständiger Echosignale, deren Amplitude mit wachsender Zeit im Allgemeinen abnimmt. Dabei werden die einzelnen Hin- und Hergänge, also die Strecke des Schall von der Ankoppelfläche zur Rückwand und umgekehrt, jeweils als Bein bezeichnet. Ausgehend vom Winkelprüfkopf wird also zunächst ein erstes Bein erzeugt, das von der Ankoppelfläche schräg bis hin zur Rückwand verläuft. Dort wird der Schall reflektiert und es bildet sich ein zweites Bein, welches von der Rückwand bis zur Ankoppelfläche verläuft, usw.

Die Position Ortung eines Reflektors (Fehlers) im Prüfkörper wird auf Basis der bekannten und gemessenen Daten errechnet. Die Echoamplitude wird für eine Abschätzung der Fehlergröße herangezogen. Dies ist jedoch nicht zuverlässig möglich, da die Echoamplitude wesentlich mehr Einflüssen unterworfen ist als die Schallaufzeit.

Es sind Verfahren bekannt, die eine Abschätzung der Fehlergröße oder der Ungänze erlauben. In diesen Verfahren wird die Größe (Durchmesser) eines Modellreflektors (Kreisscheibe, zylinderförmiger Reflektor) abgeschätzt. Die so ermittelte Größe ist nicht identisch mit der tatsächlichen Fehlergröße und wird daher als äquivalenter Kreisscheiben- bzw. Querbohrungsdurchmesser bezeichnen. Bei Verwendung von Kreisscheibenreflektoren hat sich die kürzere Bezeichnung Ersatzreflektorgröße (ERG) durchgesetzt. Dass die tatsächliche Fehlergröße nicht mit der Ersatzreflektorgröße übereinstimmt, liegt daran, dass die von einem na-, türlichen Fehler reflektierten Schallanteile zusätzlich durch die Form, Orientierung und Oberflächenbeschaffenheit des Fehlers beeinflusst werden. Da bei der manuellen Ultraschallprüfung weitergehende Untersuchungen hierzu schwierig und wenig praktikabel sind, werden in den meisten Spezifikationen und Richtlinien zur Ultraschallprüfung deshalb die Kriterien zur Registrierung von Fehlstellen an eine bestimmte Ersatzreflektorgröße geknüpft. Das bedeutet: Der Prüfer ermittelt, ob eine aufgefundene Fehlstelle die Ersatzreflektorgröße erreicht oder überschreitet, die als Grenzwert (Registriergrenze) im Regelwerk angegeben wurde. Darüber hinaus muss er weitere Untersuchungen durchführen, zum Beispiel zu Registrierlänge, Echodynamik usw., die aber an dieser Stelle nicht weiter diskutiert werden sollen.

Problematisch ist jedoch insbesondere bei der Untersuchung mit einem Winkelprüfkopf, dass dann wenn die Fehlstelle, beispielsweise ein Riss, im Extremfall parallel zum Schallweg ausgerichtet ist, die Wahrscheinlichkeit sehr hoch ist, dass der Schall die Fehlstelle verfehlt. Trifft der Schall dagegen auf die Fehlstelle, wird er reflektiert und das Signal registriert. Auf Basis der Ersatzreflektorgröße ergibt sich eine Fehlstelle, die auf dem Monitor sehr klein erscheint. Es wird nicht deutlich, dass sich die Fehlstelle in Richtung des Schallwegs in erheblich größerem Maße erstreckt.

Die Prüfkörpergeometrie wird besonders deutlich, wenn der Prüfkörper auch im Querschnitt dargestellt wird. Dies ist möglich, wenn die Wanddicke des Prüfkörpers bekannt ist. Da zusätzlich auch der Einschallwinkel, mit dem der Schall ausgehend vom Winkelprüfkopf in den Prüfkörper eingeschallt wird, bekannt ist, ist es auch möglich den Schallverlauf durch den Prüfkörper darzustellen.

Verwandte Verfahren werden unter anderem offenbart in: Bohn H et al: "Apparative developments for in-service inspections of reactor pressure vessels", Nucl Eng Des NI, 102(3), 1987, 341-355, Brekow G et al: "Signalverarbeitung und Ergebnisdarstellung mit Ultraschall-Gruppenstrahlerpruefkoepfen Signal Processing and Presentation of Results in Ultrasonic Testing with Phased Array Probes", Materialpruefung, 31 (10), 1989, 311-314, JP60014166 and US4497210

Die DE 102 59 658 beschreibt ein Verfahren mit dem die Darstellung eines Fehlers, der mit Hilfe eines Winkelprüfkopfes ermittelt wurde, auf einem Display verbessert wird. Das Messergebnis wird nicht oder nicht nur als sog. A-Bild dargestellt, sondern es wird die Prüfkörpergeometrie auf dem Display gezeigt. Diese Darstellung ist deshalb möglich, weil in zwei Verfahrensschritten aus zwei Richtungen in den Prüfkörper eingeschallt wird. Mit Hilfe der Vergleichskörpermethode wird ein ermittelter Fehler direkt maßstäblich jeweils in Querschnittsbildern dargestellt, die optisch sozusagen übereinander gelegt werden. Nachteilig bei diesem Verfahren ist, dass nach einer ersten Prüfung das Ergebnis zunächst gespeichert werden muss. Es wird dann eine weiter Prüfung aus einer anderen Richtung vorgenommen und die Ergebnisse werden erst dann miteinander verbunden. Dieses Verfahren führt zwar tatsächlich zu einer besseren Darstellung auf dem Display, es ist jedoch zeitaufwendig und arbeitsintensiv. Hinzu kommt, dass das so genannte Züchten des Fehlers aus zwei Richtungen getrennt erfolgt, was ebenfalls Zeit beansprucht und auch nicht immer zum optimalen Ergebnis führt.

Hier setzt nun die vorliegende Erfindung an. Sie hat es sich zur Aufgabe gemacht, die Auswertung von Ultraschallsignalen die mit Hilfe eines Ultraschall-Prüfgeräts für die zerstörungsfreie Prüfung eines Prüfkörpers gewonnen werden, zu verbessern. Aussagen über die Ausrichtung des Fehlers und die Fehlerart, beispielsweise ob der Fehler flächig oder voluminös ist, sollen möglichst genau sein. Der Prüfvorgang soll schneller und einfacher möglich sein, als dies bei bekannten Prüfverfahren der Fall ist. Es soll außerdem auch ein geeignetes Ultraschall-Prüfgerät und ein Verfahren zur Prüfung eines Prüfkörpers vorgeschlagen werden.

Erfindungsgemäß wird die Aufgabe durch ein Verfahren mit den Merkmalen des Anspruchs 1 erreicht und ein mit einem Ultraschall-Prüfgerät mit den Merkmalen des Anspruch 10 gelöst.

Im Sinne der vorliegenden Erfindung ist der Begriff Fehler nicht nur wörtlich, also nicht nur im Sinne von Ungänze zu verstehen, sondern soll vielmehr im Sinne von signifikantem Signal verstanden werden. Die Erfindung beinhaltet also das Auffinden jeglicher relevanter Stellen in einem Prüfkörper.

Die Erfindung nutzt zwei Array-Prüfköpfe. Ein Array ist im Prinzip ein Einzelschwinger, der in viele einzelne Elemente unterteilt ist. Typische Elementbreiten reichen von 0,5 mm bis ca. 2,5 mm, andere Abmessungen sind natürlich auch möglich. Der-Begriff Array umfasst auch so genannte Ring-Gruppenstrahler, also runde Schwinger oder Elemente, die in konzentrisch geformte Einzelelemente aufgeteilt sind.

Die Verwendung mehrerer kleiner Schwinger bewirkt, dass eine dynamische Fokussierung und ein Schwenken des Schallbündels möglich wird. Außerdem ergibt sich eine besonders wirksame Schallübertragung, da kleinerer Elemente weniger Anregungsenergie benötigen. Als Empfänger sprechen sie bereits wegen der geringen anzuregenden Masse äußerst effizient an. Ein großer Schwinger liefert zwar eine große ebene Abtastung, seine relativ geringe Auffächerung (die kleine Divergenz) begrenzt die Fehlerauffindbarkeit. Kleine Schwinger hingegen haben einen viel größeren Divergenzwinkel.

Weiterhin spricht für die Verwendung eines Array-Prüfkopfs die Fähigkeit ein dynamisch veränderbares Ultraschallbündel zu erzeugen und so über einen "Virtuellen Prüfkopf" zu verfügen. Es können somit beliebige Einschallwinkel innerhalb der Schallbündelcharakteristik des Einzelschwingers eingestellt werden.

Sogenannte Phased-Array-Prüfköpfe regen die einzelnen Elemente zu unterschiedlichen Zeitpunkten an, wodurch eine Wellenfront erzeugt wird, die durch gegeneinander verzögert einstrahlende Schallkeulen charakterisiert ist. Diese Wellenfront sieht wie das Schallfeld eines konventionellen Winkelprüfkopfs aus. Durch Variationen der Verzögerungszeiten können verschiedene Schallfelder erzeugt werden.

Erfindungsgemäß wird im Rahmen einer Prüfung die Schallbündelschwenkung auch dazu benutzt, um einen Schallstrahl dynamisch zu fokussieren. Dies wird durch eine elektronische Einheit erreicht, die eine entsprechende Auswahl der Ansteuerung der Einzelelemente ermöglicht und gleichzeitig Impulsverzögerungen bewirken kann. Im Prinzip wird ein Fokuspunkt durch den Prüfkörper hindurchgefahren. Die Kombination aus dynamischer Fokussierung und Schallbündelschwenkung bewirkt ein Schallbündel, das gleichzeitig fokussiert ist und unter einem Winkel einfällt.

Erfindungsgemäß kann auch eine so genannte lineare Abtastung genutzt werden, bei der zusammenliegende Schwingergruppen nacheinander angesteuert werden.

So wird ein Abtasteffekt erzeugt. Die Breite der durch den Prüfkörper hindurch wandernden Schallkeule und die Abtastschrittweite können durch die Anzahl der gleichzeitig angesteuerten Einzelelemente und durch den Versatz von Impuls zu Impuls festgelegt werden.

Vorteilhafterweise erfolgt die Materialprüfung mit der Impuls-Echo-Technik, wobei zwei Array-Prüfköpfe eingesetzt werden, die aus zwei Richtungen in den Prüfbereich einschallen können. Beispielsweise kann ein Array-Prüfkopf auf einer Seite einer Schweißnaht und der andere Array-Prüfkopf auf der gegenüberliegenden Seite der Schweißnaht auf einer Ankoppelfläche eines Prüfkörpers angeordnet sein. Die beiden Array-Prüfköpfe schallen beide (aber nicht zeitgleich) in die Schweißnaht hinein. Beide Array-Prüfköpfe bzw. deren Sender und Empfänger können Ultraschallsignale senden und empfangen. Wesentlich ist dabei, dass die beiden Array-Prüfköpfe zueinander kalibriert sind, d.h., der Abstand zwischen den beiden Array-Prüfköpfen bzw. der einzelnen Schwingerelemente innerhalb der Array-Prüfköpfe bekannt sind. Sind dieser Abstand, die Stärke des Prüfkörpers und der Einschallwinkel bekannt, kann während der Prüfung stets der Abstand der Array-Prüfköpfe zueinander kontrolliert werden. Dies kann zum Beispiel über die Zeitdauer des Schalls von einem Array-Prüfkopf zum anderen errechnet werden (V-Durchschallung).

Der virtuelle Prüfkopf wird innerhalb des Array-Prüfkopfs elektronisch beispielsweise von links nach rechts verschoben, so dass das Schallbündel weitgehend das ganze Volumen der Schweißnaht erfasst. Zunächst wird dabei nur mit einem Array-Prüfkopf eingeschaltet. Wird ein Fehler oder eine Ungänze gefunden, wird durch elektronische Verschiebung des virtuellen Prüfkopfes die Echoanzeige gezüchtet bzw. maximiert. Der Fehler kann dabei direkt oder indirekt, also nach einer Reflektion an der Rückwand getroffen werden. Nach der Optimierung des Fehlersignals können bei bekannter Wanddicke und bei bekanntem Einschallwinkel mindestens drei weitere Einschallpositionen berechnet und die virtuellen Prüfköpfe hintereinander entsprechend angesteuert werden. Drei weitere Einschallpositionen ergeben sich z. B. dann, wenn beide Array-Prüfköpfe einschallen. Es ergeben sich zwei direkte Schallwege und zwei indirekte, also an der Rückwand reflektierte Schallwege zum Fehler. Daraus können für die vier Einschallpositionen acht Messwerte, nämlich vier Laufzeitwerte und vier Amplitudenwerte abgeleitet bzw. ermittelt werden. Grundsätzlich ist es erfindungsgemäß auch möglich, durch Variation der Einschallwinkel weitere Laufzeitwerte und Amplitudenwerte zu erzeugen und zu berechnen.

Aus den Amplitudenwerten können nun entweder nach der Vergleichskörpermethode oder nach der so genannten AVG-Methode (Abstand, Verstärkung, Größe) Ersatzreflektorgrößen bestimmt werden.

Ein wesentlicher Vorteil der Erfindung besteht darin, dass eine Aussage darüber getroffen werden kann, ob der Fehler voluminös oder flächig ist. Handelt es sich beispielsweise um einen voluminösen Fehler, werden alle vier Echoanzeigen eine etwa vergleichbare Amplitude aufweisen. Bei einem flächigen Fehler dagegen weisen zwei Amplituden wesentlich größere Werte als die beiden anderen Amplituden auf.

Zusätzlich zu der Amplitudenbewertung kann die Auswertung der Laufzeitwerte zu einer Größenermittlung herangezogen werden, indem die Summe der Laufzeiten, die zu einer V-Durchschallung gehören, mit der Gesamtlaufzeit für eine ungestörte V-Durchschallung verglichen werden. Die Differenz dieser beiden Werte ergibt die Ausdehnung des Reflektors in der entsprechenden Einschallrichtung. Die Ausdehnung ergibt sich also aus der Differenz der Laufzeit für eine komplette V-Durchschallung und der Summe der Laufzeiten.

Erfindungsgemäß wird das beschriebene Verfahren für alle Fehler und Ungänzen im zu prüfenden Querschnitt wiederholt. Je nach Bedarf kann die Prüfung mit weiteren Einschallwinkeln entsprechend wiederholt werden, um die Ermittlung der tatsächlichen Fehlergröße noch weiter zu verbessern. Zur Sicherstellung einer einwandfreien Messung sollte in zeitlichen Abständen jeweils eine V-Durchschallung zwischen den beiden Array-Prüfköpfen zur Ankoppelkontrolle erfolgen.

Das beschriebene Verfahren kann in einer nächsten Dimension, also beispielsweise entlang des Verlaufs einer Schweißnaht entsprechend häufig wiederholt werden, um somit eine Schweißnaht oder auch einen einzelnen Fehler über ihre/seine gesamte Länge überprüfen zu können. Erfindungsgemäß ist es auch möglich, die Array-Prüfköpfe sozusagen virtuell entlang der Schweißnaht oder des Fehlers zu bewegen. Der Einschallpunkt kann also sowohl quer zur Schweißnaht, als auch längs zur Schweißnaht verschoben werden. Bei entsprechender Größe von Array-Prüfköpfen können ohne ein mechanisches Verschieben der Array-Prüfköpfe somit sehr große Flächen oder Längen geprüft werden.

Erfindungsgemäß sind die beiden Array-Prüfköpfe mechanisch miteinander verbunden. Es hat sich als besonders vorteilhaft erwiesen, wenn ihr Abstand zueinander veränderbar, bzw. die mechanische Verbindung in ihrer Länge einstellbar ist. Die mechanische Verbindung kann eine Skalierung aufweisen, auf der der Abstand der beiden Array-Prüfköpfe zueinander abgelesen werden kann.

Vorteilhafterweise besteht die mechanische Verbindung aus einer Art Rahmen, der zwei Aufnahmebereiche für jeweils einen Array-Prüfkopf aufweist. Diese beiden Aufnahmebereiche sind über eine mechanische Verbindung miteinander verbunden und können aufeinanderzu- und voneinanderweg bewegt werden. In einer besonders vorteilhaften Ausführungsvariante wird der Abstand zwischen den beiden Aufnahmebereichen ständig elektronisch ermittelt und an die elektronische Einheit zur Weiterverarbeitung bzw. Berechnung übermittelt. Somit ist eine doppelte Kontrolle gegeben, nämlich über die Schalldauer von einem Array-Prüfkopf zum anderen und über die elektronische Abstandskontrolle. Der Schallweg wird als so genannter V-Weg bezeichnet.

Die rahmenartige mechanische Verbindung ist erfindungsgemäß flexibel ausgeführt, so dass leichte Unebenheiten auf der Ankoppelfläche des Prüfkörpers ausgeglichen werden können.

Die Beschallung aus zwei Richtungen bewirkt insbesondere auch, dass ein schräg liegender Fehler bezüglich seiner Ausbreitung in zwei Richtungen schnell bestimmt werden kann. Die Daten beider Array-Prüfköpfe werden von einer elektronischen Einheit empfangen und unmittelbar aufbereitet. So werden gleichzeitig zwei Bilder des Fehlers erzeugt, die unmittelbar übereinander gelegt und vom Prüfer direkt hochgezüchtet werden kann. Das erfindungsgemäße Verfahren ist damit sehr effektiv und schnell.

Das Messergebnis wird dabei nicht oder nicht nur als sog. A-Bild dargestellt, sondern es wird die Prüfkörpergeometrie auf dem Display gezeigt. Die Prüfkörpergeometrie wird besonders deutlich, wenn der Prüfkörper im Querschnitt dargestellt wird. Dies ist möglich, wenn die Wanddicke des Prüfkörpers bekannt ist. Da zusätzlich auch der Einschallwinkel, mit dem der Schall ausgehend von den Array-Prüfköpfen in den Prüfkörper eingeschallt wird, bekannt ist, ist es auch möglich den Schallverlauf durch den Prüfkörper darzustellen. Besonders informativ ist die Darstellung dann, wenn auch die Abmessungen relevanter zu untersuchender Bereiche in die Querschnittsdarstellung aufgenommen werden können. Dies ist insbesondere bei der Untersuchung von Schweißnähten hilfreich und leicht möglich. Es ergibt sich also eine Darstellung, in der beispielsweise zwei Stahlplatten, die endseitig über eine Schweißnaht miteinander verbunden sind, im Querschnitt dargestellt sind. Entsprechend ist zwischen den beiden Stahlplatten die Schweißnaht durch Linien dargestellt. Mit Hilfe der AVG oder Vergleichskörpermethode und/oder Ermittlung der Ausdehnung des Fehlers durch die berechneten Schallwegdifferenzen wird ein ermittelter Fehler direkt maßstäblich in diesem Querschnittsbild dargestellt.

Es ist also erkennbar, welchen Weg der Schall ausgehend von den Array-Prüfköpfen durch den Prüfkörper nimmt und in welchen Beinen bzw. an welchen Stellen der Schall auf den Fehler trifft. Voraussetzung für ein solches System ist, wie bereits erläutert, dass die Einschallwinkel sowie die Wanddicke des Prüfkörpers bekannt sind. Aus diesen Informationen lässt sich der Schallweg für jedes Bein und damit der Übergang von einem Bein zum nächsten bzw. der Punkt an dem die Reflektion des Schalls an der Ankoppelfläche oder an der Rückwand erfolgt, leicht berechnen.

Auf Basis dieser Darstellung ist es möglich, den Prüfer mit relevanten Informationen über den Fehler, insbesondere über seine Größe und Ausrichtung zu informieren, wenn der Prüfer nach dem nachfolgend beschriebenen Verfahren vorgeht.

Der aufgefundene Fehler ist also durch mindestens zwei Fehlersignale, die sich aus den beiden Ersatzreflektorgrößen ergeben haben bzw. aus den Schallwegdifferenzen, angezeigt, wodurch es dem Prüfer möglich ist, auf den ersten Blick zur erkennen, wie sich der Fehler in verschiedene Richtungen erstreckt. Es ergibt sich somit eine zweidimensionale Darstellung des Fehlers.

Die Genauigkeit des erfindungsgemäßen Verfahrens kann dadurch erhöht werden, dass der Fehler nicht nur aus zwei, sondern aus mehreren Richtungen untersucht wird und eine entsprechende Anzahl Bilder übereinander gelegt dargestellt wird.

In einer besonders vorteilhaften Ausführungsvariante errechnet das Ultraschallgerät bzw. ein darin befindlicher Prozessor oder Rechner aus den bereits aus verschiedenen Richtungen ermittelten Fehlergrößen eine Draufsicht auf den Fehler, sozusagen eine Darstellung des Fehlers in der Prüfkörperebene. Vorteilhafterweise kann diese Draufsicht auch parallel zur gleichzeitig mit der Querschnittsdarstellung auf dem Display dargestellt werden, das Display wird also in zwei Ansichten unterteilt. Vorzugsweise ist auch in dem Draufsichtbild der relevante Bereich, beispielsweise die Schweißnaht, durch Linien dargestellt. Die Auswertung der Fehlerlänge in der Prüfkörperebene kann dabei vorteilhafterweise automatisch nach der Halbwertsmethode erfolgen. Dazu ist eine elektronische und/oder mechanische Bewegung der Array-Köpfe längs der Schweißnaht zur Ermittlung der Prüfkopfposition notwendig.

In der Draufsicht wird der Fehler vorzugsweise in einem x-y-Diagramm dargestellt, bei dem auf einer der Achsen die Breite und auf der anderen Achse die Länge des Fehlers in Millimeter oder einer anderen geeigneten Einheit ablesbar ist. Erfindungsgemäß wird bei der Berechnung dieser Darstellung in der Draufsicht die Skalierung automatisch ermittelt.

Vorteilhafterweise werden bei der Speicherung einzelner relevanter Querschnittsbilder auch die A-Bilder im Hintergrund abgespeichert.

Die Array-Prüfköpfe können sowohl manuell als auch mechanisch über den Prüfkörper geführt werden. In einer weiteren vorteilhaften Ausführungsvariante weisen sie einen Taster zur Aufnahme der Nullpunktposition zu Anfang des Prüfvorgangs auf. Dies bedeutet, dass die Prüfung an einer definierten Stelle auf den Prüfkörper beginnt, wobei diese Stelle im System gespeichert wird. Somit ist es möglich, relevante Positionen der Array-Prüfköpfe im Nachhinein auf Basis der gespeicherten Daten nachzuvollziehen. Die Array-Prüfköpfe weisen hierzu Mittel auf, die dazu dienen, die jeweilige Position auf der Oberfläche des zu prüfenden Körpers in Bezug auf einen Ort anzugeben der zum Zeitpunkt des Mess-Startes vorlag. Dies kann beispielsweise mit Hilfe einer Digitalkamera erfolgen, die mit dem Gehäuse der Array-Prüfköpfe fest verbunden ist. Sie ist so ausgerichtet, dass sie die Oberfläche des zu prüfenden Körpers erfasst. Dabei soll sie möglichst nahe an der Stelle ein Bild dieser Oberfläche liefern, an der einen Zentralstrahl des aktiven Schallelements die Oberfläche durchtritt. Mittels dieser Digitalkamera wird in Zeitabständen ein elektronisches Bild von dem Teilstück Oberfläche, das sich jeweils unter der Linse der Digitalkamera befindet, dass also in der Gegenstandsebene liegt. Das Teilstück kann beispielsweise die Abmessungen von wenigen Millimetern, beispielsweise von 2 x 2 oder 4 x 4 mm haben. Vorzugsweise wird in vorgegebenen festen Zeitabständen von der Digitalkamera ein Bild des jeweiligen Teilstücks Oberfläche. Hierzu wird auf die Anmeldung DE 100 58 174 A 1 der gleichen Anmelderin verwiesenen.

Grundsätzlich ist also möglich, den Fehler dreidimensional darzustellen. Dies ist insbesondere dann möglich, wenn die Array-Prüfköpfe entlang des Fehlers bewegt werden oder eine derartige Bewegung simuliert wird.

Ist die Schweißnahtgeometrie bekannt und im Ultraschallprüfgerät bzw. im Rechner gespeichert, können sowohl räumliche Grenzwerte als auch Grenzwerte bezüglich der zu berücksichtigenden Amplitude eingegeben werden. Wenn die Nullpunktposition zu Anfang des Messvorgangs ermittelt wurde, kann die Entfernung der Array-Prüfköpfe von der Schweißnaht auf Basis der Beinlänge bzw. der Wanddicke und des Einschallwinkels jederzeit berechnet werden. Somit ist es mit Hilfe einer Blendennachführung möglich, jederzeit und unabhängig von der Position der Array-Prüfköpfe lediglich den Bereich der Schweißnaht auf dem Monitor darzustellen.

Mit Hilfe der beschriebenen Blendennachführung ist es auch möglich, eine Selektion der in der Draufsicht darzustellenden Fehler vorzunehmen. Beispielsweise kann es sinnvoll sein, wenn ein Fehler nur dann dargestellt wird, wenn er eine bestimmte Größe aufweist. Bezüglich der Fehlergröße wird also eine minimal und eine maximal zu berücksichtigende Amplitude als Blende eingegeben. Möglich ist auch die Eingabe lediglich der maximalen Amplitude, wobei weiter bestimmte wird, dass ein Fehler nur dann gezeigt wird, wenn er die Hälfte der maximalen Amplitude übersteigt.

Weitere Vorteile und Merkmale der Erfindung ergeben sich aus den Ansprüchen sowie der nun folgenden Beschreibung von nicht einschränkend zu verstehenden Ausführungsbeispielen der Erfindung, die unter Bezugnahme auf die Zeichnung im folgenden näher erläutert werden. In dieser Zeichnung zeigen:
- Figur 1:: eine Prinzipdarstellung des Schallverlaufs von Ultraschallsignalen ausgehend von ein zwei Array-Prüfköpfen durch einen Prüfkörper,

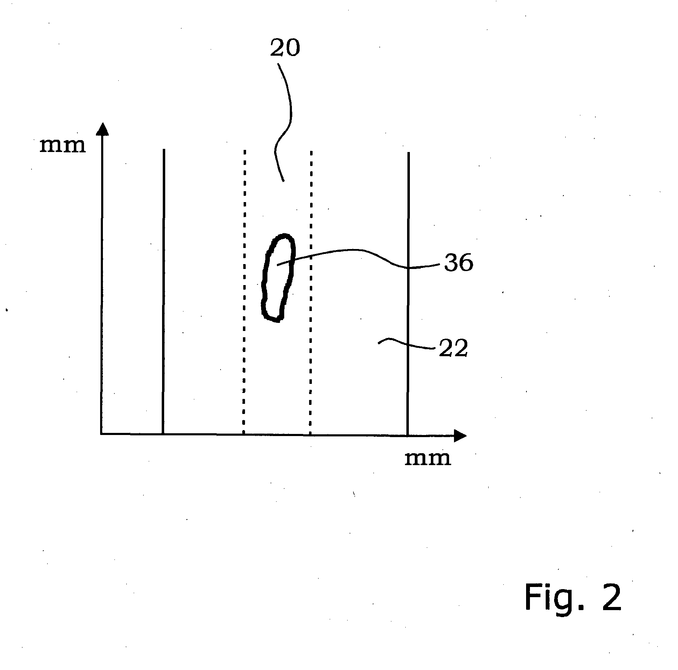

- Figur 2:: eine beispielhafte erfindungsgemäße Darstellung der gewonnenen Messdaten als Draufsicht.
- Figur 3:: eine erfindungsgemäße Ausführungsform eines Ultraschallprüfgerätes

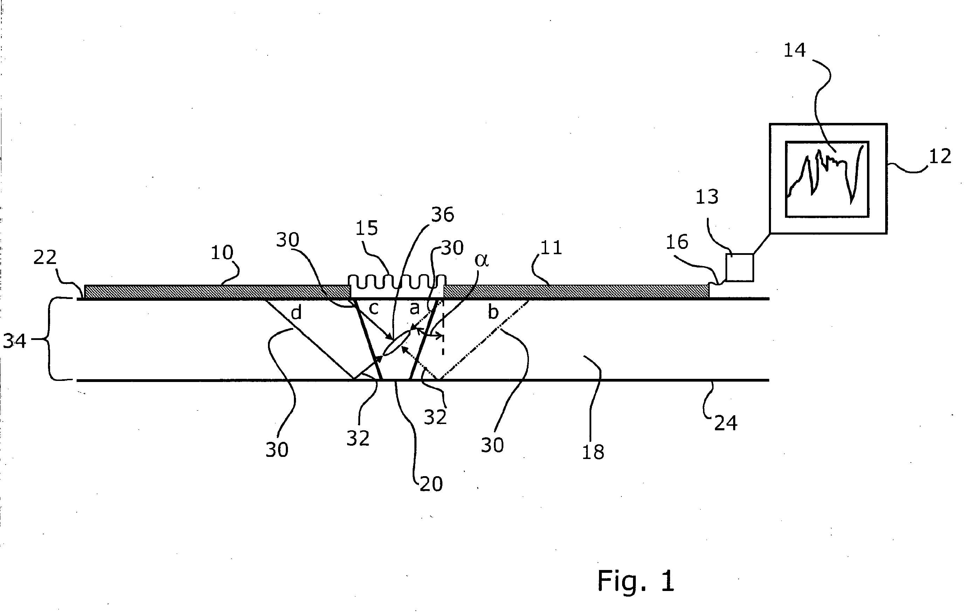

Figur 1 zeigt den prinzipiellen Aufbau einer Ultraschallmessung mit einem ersten Array-Prüfkopf 10 und einem zweiten Array-Prüfkopf 11 im Querschnitt. Grundsätzlich können auch mehr Array-Prüfköpfe 10,11 eingesetzt werden. Die Array-Prüfköpfe 10,11, die jeweils mehrere Sender und Empfänger beinhalten, sind mit einer elektronischen Einheit 13 und darüber mit einem Monitor 12, der wiederum ein Display 14 aufweist, über eine Leitung 16 verbunden. Im dargestellten Ausführungsbeispiel besteht zwischen den Array-Prüfköpfen 10,11 eine elektronische Verbindung 15, sie können aber auch jeweils einzeln mit der elektronischen Einheit 13 verbunden sein. An Stelle der Leitung 16 ist auch eine andere Verbindungsart, beispielsweise per Funk, denkbar. Die Array-Prüfköpfe 10,11 können auch derart ausgeführt sein, dass Sender und Empfänger getrennt voneinander angeordnet sind. Im Rahmen der nachfolgenden Beschreibung wird jedoch vorausgesetzt, dass sich die Sender und Empfänger in den Array-Prüfköpfen 10,11 befinden und das mit Hilfe des Echo-Impuls Verfahren gemessen wird.

Die elektronische Einheit 13 dient einer Steuerung einer Aussendung von Sendeimpulsen und zur Berechnung und Auswertung der empfangenen Ultraschallsignale sowie zur Bereitstellung von Daten zur Darstellung von Ergebnissen auf dem Monitor 12. Sie weist hierzu einen geeigneten Prozessor auf.

Der Prüfkörper 18 ist hier ein Teilstück einer Stahlplatte, die mit einer zweiten Stahlplatte über eine Schweißnaht 20 verbunden ist. Der Prüfkörper 18 weist eine Ankoppelfläche 22 und eine Rückwand 24 auf, wobei die Array-Prüfköpfe 10,11 auf der Ankoppelfläche 22 angeordnet sind. Zwischen der Ankoppelfläche 22 und der Rückwand 24 sind Einschallrichtungen bzw. Schallwege a, b, c, und d als Linien (durchgehend oder gestrichelt) angedeutet. Ausgehend von den Array-Prüfköpfen 10,11 wird der Schall jeweils zunächst in Form von Sendeimpulsen unter einem vorbestimmten Winkel α schräg in den Prüfkörper 18 eingeschallt, bildet ein erstes Bein 30 aus, wird dann an der Rückwand 24 reflektiert, bildet ein zweites Bein 32 aus, gelangt wieder zur Ankoppelfläche 22 und zum anderen Array-Prüfkopf 10 bzw. 11. Es wird ausdrücklich darauf hingewiesen, dass es sich hier nur um eine prinzipielle, stark vereinfachte Darstellung handelt, die nicht technisch zu verstehen ist, sondern vielmehr die grundsätzlichen Zusammenhänge der Erfindung besser verdeutlichen soll.

Die schräge Einschallung kann beispielsweise durch die Verwendung von Phased-Array-Prüfköpfen 10, 11 erreicht werden.

Aus einer Wanddicke 34 und dem Winkel α ist es leicht möglich, die Länge eines Beines 30, 32 bzw. den Punkt des Übergangs von einem Bein 30, 32 zum nächsten zu berechnen. Ist bekannt, welches Bein 30, 32 auf den Fehler 36 getroffen ist, kann unmittelbar auf den ungefähren Abstand des Fehlers 36 zu den Array-Prüfköpfen 10 bzw. 11 geschlossen werden, zumindest ist klar, dass sich der Fehler auf der Wegstrecke des entsprechenden Beins 30, 32 befindet.

Trifft der Schall auf einen Fehler 36, beispielsweise einen Riss, wird er zumindest teilweise reflektiert und gelangt je nach Ausrichtung des Fehlers 36 als Echosignal zurück zum Empfänger.

Vorteilhafterweise erfolgt die Darstellung der gewonnenen Messdaten auf dem Display 14 in einem Querschnittsbild. Die Ankoppelfläche 22 und die Rückwand 24 sowie die Schweißnaht 20 sind als Linien in einem Diagramm dargestellt, bei dem auf einer x-Achse und einer y-Achse jeweils Längeneinheiten aufgetragen sein können.

Bei der Prüfung des Prüfkörpers 18 werden die Array-Prüfköpfe 10, 11 zunächst auf die Ankoppelfläche 22 aufgesetzt und Ultraschallimpulse mit dem zweiten (hier rechten) Array-Prüfkopf 11 unter bestimmten Winkeln α in den Prüfkörper 18 eingeschallt. Trifft der Schall auf einen Fehler 36, wird ein optimales Fehlersignal 40 gezüchtet. Züchten bedeutet in diesem Zusammenhang, dass der Prüfer versucht, maximale Fehlersignale zu finden und darzustellen. Im vorliegenden Beispiel erfolgt das Züchten auf Basis des Beins a des zweiten Array-Prüfkopfes 11. Das Züchten erfolgt im vorliegenden Fall durch ein elektronisches Verschieben des virtuellen Prüfkopfs.

Da die Wanddicke 34 und der Winkel α bekannt sind, können auch die weiteren Einschallpositionen berechnet und die virtuellen Prüfköpfe hintereinander entsprechend angesteuert werden (Beine b, c und d).

Es entstehen somit vier Einschallpositionen, aus denen acht Messwerte, nämlich vier Laufzeitwerte und vier Amplitudenwerte herleitbar sind. Aus einem Vergleich der Amplitudenwerte kann unmittelbar eine Aussage über die Form des Fehlers 36, nämlich ob der voluminös oder flächig ist, gezogen werden. Auch kann die Auswertung der vier Laufzeitwerte zu einer Größenermittlung herangezogen werden, da sich die Ausdehnung aus der Differenz der Laufzeit für eine komplette V-Durchschallung und der Summe der Laufzeiten (hier Beine b und d) ergibt.

Aus den Messwerten wird vorzugsweise nach AVG oder Vergleichskörpermethode und/oder aufgrund der Schallwegdifferenzen die Ersatzreflektorgröße bestimmt und auf dem Display 14, also im Querschnittsbild, als erstes Fehlersignal dargestellt. Es ergibt sich ein Messbild, welches der Prüfer ggfs. in einem Datenspeicher, der in der elektronischen Einheit 13 vorgesehen sein kann, speichert.

Auch kann es sinnvoll sein, wenn die Darstellung der Fehlersignale in Abhängigkeit an die ermittelte Amplitude kodiert, insbesondere farbkodiert erfolgt. Beispielsweise können Fehler 36, die eine bestimmte Größe überschreitet, in einer Signalfarbe, z.B. rot, dargestellt werden.

Die dargestellten Fehlersignale werden maßstäblich auf dem Display 14 angezeigt. Es zeigt sich also in der beispielhaften Darstellung, dass sich der Fehler 36 stärker quer zum Schallweg 28 als zum Schallweg 26 erstreckt. Werden weitere Einschallwinkel zur Auswertung herangezogen, ergibt sich ein noch genaueres Bild des Fehlers 36. Grundsätzlich werden die Einschallpositionen entlang der Ausrichtung der beiden Array-Prüfköpfe 10, 11 verändert, also sozusagen quer zum Fehler 36 bzw. auf ihn zu und von ihm weg. Zusätzlich können die Einschallpositionen zum Beispiel längs zum Fehler 36 variiert werden, entweder durch manuelles oder virtuelles Verschieben der Sender/Empfänger der Array-Prüfköpfe 10, 11.

Der Benutzer des Ultraschallprüfgeräts bzw. der Prüfer bekommt also mit Hilfe der erfindungsgemäßen Darstellung eine sehr genaue Vorstellung von der Ausrichtung, der Größe und dem Volumen des Fehlers 36, insbesondere davon, ob es sich um einen voluminösen oder flächigen Fehler, zum Beispiel um einen Riss, handelt.

In einer besonders vorteilhaften Ausführungsvariante werden die den Messbildern bzw. dem Auswertungsbild zu Grunde liegenden Daten weiterhin in einer Draufsicht dargestellt. Dies bedeutet, dass beispielsweise auf dem Monitor 12 bzw. dem Display 14 der Prüfkörper 18 und die Schweißnaht 20 ebenfalls durch Linien dargestellt werden. Die gewonnenen Daten, die den Fehlersignalen zu Grunde liegenden, werden derart umgerechnet, dass die Erstreckung des Fehlers 36 in der Längsebene des Prüfkörpers 18, also in der Ebene die quer zum Querschnittsbild 38 verläuft, auf dem Display 14 angezeigt wird. Auch diese Darstellung erfolgt in einem Diagramm, welches sowohl auf der x- als auch um der y-Achse Längeneinheiten aufweist, so dass die Länge und die Breite des Fehlers 36 in der Längsebene des Prüfkörpers 18 leicht erkennbar ist.

Parallel zur erfindungsgemäßen Darstellung der Messdaten können auch A-Bilder erzeugt werden. Diese können entweder im Hintergrund abgespeichert oder gleichzeitig auf dem Display 14 angezeigt werden.

Ohnehin können verschiedenen Darstellungen, also die Querschnittsbilder 38, die Auswertungsbilder 44 und die Draufsichtbilder 46 gleichzeitig auf dem Display 14 dargestellt werden, es kann aber auch sinnvoll sein, wenn der Prüfer zwischen diesen Darstellungen wechseln kann.

Vorteilhaft bei der erfindungsgemäßen Darstellung ist auch, dass auf dem Monitor 12 bzw. dem Display 14 lediglich der Bereich des zu untersuchenden Prüfkörpers 18 dargestellt wird, der bei der Untersuchung von Interesse ist. Dies kann beispielsweise die zu untersuchende Schweißnaht 20 sein. Hierzu werden sowohl räumliche Grenzwerte als auch Grenzwerte bezüglich der zu berücksichtigenden Amplituden vor der Messung in das Ultraschall-Prüfgerät eingegeben und berücksichtigt. Dies bedeutet, dass nur Signale angezeigt werden, deren Ursprung entweder der Bereich und/oder das Umfeld der zu untersuchenden Schweißnaht 20 ist und/oder deren Signalstärke den minimalen Grenzwert übersteigt.

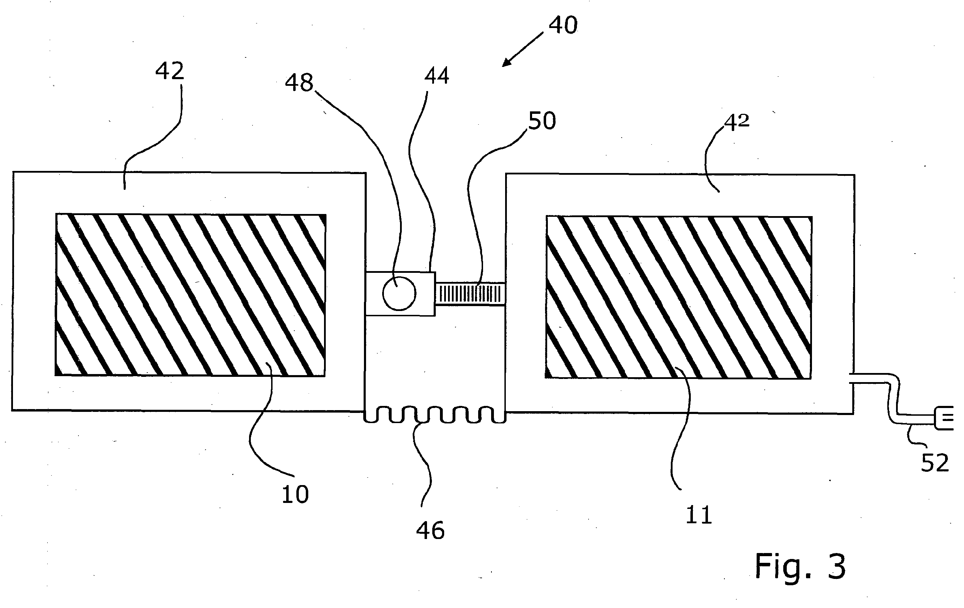

Figur 3 zeigt beispielhaft eine erfindungsgemäße Ausführungsvariante eines Ultraschall-Prüfgeräts bzw. einer bevorzugten Anordnung der Array-Prüfköpfe 10, 11. Eine Rahmenkonstruktion 40 weist Aufnahmebereiche 42 für die beiden Array-Prüfköpfe 10, 11 auf. Die beiden Aufnahmebereiche 42 sind ebenfalls rahmenartig ausgebildet und über eine mechanische Verbindung 44 miteinander verbunden. Weiterhin ist ein Kabel 46 dargestellt, dass die beiden Aufnahmebereiche 42 ebenfalls miteinander verbindet. In die Aufnahmebereiche 42 können die Array-Prüfköpfe 10, 11 eingebracht werden. Sie sind in den Aufnahmebereichen 42 sicher gehalten. Vorzugsweise weist die mechanische Verbindung 44 eine Verstelleinrichtung 48 auf, über die der Abstand zwischen dem Aufnahmebereichen 42 verstellbar ist. Darüber hinaus kann eine Skalierung 50 vorgesehen sein, über die der Abstand der Aufnahmebereiche 42 zueinander ablesbar ist. Innerhalb der Aufnahmebereiche 42 ist ein Anschluss (nicht dargestellt) für die Array-Prüfköpfe 10, 11 vorgesehen, über die diese energetisch versorgt werden und auch ein Datenaustausch möglich ist. Die Rahmenkonstruktion 40 weist vorzugsweise an nur einem Aufnahmebereich 42 einen Anschluss 52 für die hier nicht dargestellte elektronische Einheit 13 oder ein anderes elektronisches Gerät, wie beispielsweise einen Rechner (PC) oder den Monitor 12 auf.

In einer besonders vorteilhaften Ausführungsvariante wird die Rahmenkonstruktion 40 bzw. werden die Array-Prüfköpfe 10, 11 nicht manuell, also per Hand, über den Prüfkörper 18 geführt, sondern die Nachführung erfolgt automatisch. Gerade für diesen Anwendungsfall ist die erfindungsgemäße Ausgestaltung des Ultraschall-Prüfgerätes bzw. das erfindungsgemäße Verfahren sehr hilfreich, da sehr viele Daten in sehr kurzer Zeit erhoben werden und ein Züchten des Fehlers auch aufgrund der bereits ermittelten Daten oder Fehlersignale im Nachhinein möglich ist.

Aus dem Vorangegangenen ist ersichtlich, dass sich das erfindungsgemäße Gerät und insbesondere auch das damit durchgeführte Verfahren zur Prüfung von Werkstücken für eine Serienmessung eignen. Beispiel für eine Serienmessung ist die Prüfung von Schweißverbindungen von Rohrleitungen. Das Prüfgerät wird zunächst an einem Werkstück oder wenigen Werkstücken einjustiert, anschließend wird die Serienprüfung durchgeführt.

Die Erfindung wurde nur beispielhaft erläutert, der Aufbau eines erfindungsgemäßen Ultraschall-Prüfgerätes kann sehr unterschiedlich sein. Auch sind Array-Prüfköpfe 10, 11 unterschiedlicher Bauart verwendbar. Je nach Prüfkörper 18 kann es sinnvoll sein, die Prüfung aus einer anderen Richtung zu wiederholen. Bei flächigen Prüfkörpern 18 kann beispielsweise die der Ankoppelfläche 22 gegenüberliegende Oberfläche als Ankoppelfläche 22 genutzt werden.

## Patentansprüche

1. Verfahren zur Darstellung von Ultraschallsignalen, die mit Hilfe eines Ultraschall-Prüfgeräts für die zerstörungsfreie Prüfung eines Prüfkörpers (18) gewonnen werden, wobei das Ultraschall-Prüfgerät mindestens einen ersten Array-Prüfkopf (10) und einen zweiten Array-Prüfkopf (11) mit jeweils mehreren einzelnen Sendern, die Sendeimpulse erzeugen, und jeweils mehreren Empfängern, die Ultraschallsignale empfangen,
aufweist, mit den Verfahrensschritten:
- Aufsetzen der Array-Prüfköpfe (10, 11) auf eine Ankoppelfläche (22), des Prüfkörpers (18), wobei sich ein zu prüfender Bereich des Prüfkörpers (18) zwischen den beiden Array-Prüfköpfen (10, 11) befindet,
- Einschallen von Ultraschallimpulsen mit dem ersten Array-Prüfkopf (10) unter bestimmten Winkeln (α) in den Prüfkörper (18),
- Empfangen von Ultraschallsignalen mit Hilfe des ersten Array-Prüfkopfes (10),
- Auffinden eines Fehlers (36) mittels des ersten Array-Prüfkopfes (10) und Züchten eines Fehlersignals (40) aus einer ersten Einschallrichtung (a), in welcher der Fehler (36) aufgefunden wurde,
- Berechnen von wenigstens drei weiteren Einschallpositionen und - richtungen (b, c, d) der beiden Array-Prüfköpfe (10, 11) auf Basis bekannter Wanddicke (34) des Prüfkörpers (18) und bekanntem Winkel (α) der ersten Einschallrichtung (a), wobei die wenigstens drei weiteren Einschallpositionen und Einschallrichtungen so berechnet werden, dass sich insgesamt zwei direkte Schallwege (a,c) zum Fehler (36) und zwei indirekte Schallwege (b,d) zum Fehler (36) über eine Reflexion an der Rückwand (24) des Prüfkörpers (18) ergeben,
- Einschallen und Empfangen von Ultraschallimpulsen mit beiden Array-Prüfköpfen (10,11) in den wenigstens vier Einschallrichtungen (a,b,c,d),
- Ermitteln der Erstreckung des Fehlers (36) auf Basis von Laufzeiten und Amplituden der Einschallrichtungen (a, b, c, d).

2. Verfahren nach Anspruch 1, dadurch vier Laufzeitwerte und vier Amplitudenwerte ausgewertet werden.

3. Verfahren nach Anspruch 1 oder Anspruch 2, **dadurch gekennzeichnet, dass** der Fehler (36) aus weiteren Einschallpositionen beschallt wird.

4. Verfahren nach einem der Ansprüche 1 bis 3, **dadurch gekennzeichnet, dass** die Einschallpositionen quer zum Fehler (36) variieren.

5. Verfahren nach einem der Ansprüche 1 bis 4, **dadurch gekennzeichnet, dass** die Einschallpositionen längs zum Fehler (36) variieren.

6. Verfahren nach einem Ansprüche 1 bis 5, **dadurch gekennzeichnet, dass** der Fehler (36) maßstäblich in einem Auswertungsbild auf dem Display (14) eines Monitors (12) dargestellt wird.

7. Verfahren nach einem Ansprüche 1 bis 6, **dadurch gekennzeichnet, dass** das Auswertungsbild ein Querschnittsbild (38) beinhaltet und zumindest eine Ankoppelfläche (22) und eine Rückwand (24) des Prüfkörpers (18) erkennbar ist.

8. Verfahren nach einem der Ansprüche 1 bis 7, **dadurch gekennzeichnet, dass** bei einer Untersuchung einer Schweißnaht (20) diese ebenfalls dargestellt ist.

9. Verfahren nach einem der Ansprüche 1 bis 8, **dadurch gekennzeichnet, dass** die jeweilige Position des Winkelprüfkopfs (10) auf der Oberfläche des Prüfkörpers (18) permanent ermittelt wird.

10. Ultraschall-Prüfgerät für eine zerstörungsfreie Prüfung eines Prüfkörpers (18) mit
- mindestens einem ersten Array-Prüfkopf (10) und einem zweiten Array-Prüfkopf (11), die jeweils mehrere einzelne Sender, die Sendeimpulse erzeugen, und jeweils mehrere Empfänger, die Ultraschallsignale empfangen, aufweisen,
- einer elektronischen Einheit, die mit den Array-Prüfköpfen (10, 11) verbunden ist und einen Prozessor zur Steuerung der Aussendung der Sendeimpulse und zur Berechnung und Auswertung der empfangenen Ultraschallsignale sowie zur Bereitstellung von Daten zur Darstellung von Ergebnissen aufweist, wobei die elektronische Einheit dazu eingerichtet ist ein Verfahren gemäß Anspruch 1 auszuführen.

11. Ultraschall-Prüfgerät für die zerstörungsfreie Prüfung eines Prüfkörpers (18) nach Anspruch 10, **dadurch gekennzeichnet, dass** die beiden Array-Prüfköpfe (10, 11) mechanisch miteinander verbunden sind.

12. Ultraschall-Prüfgerät für die zerstörungsfreie Prüfung eines Prüfkörpers (18) nach Anspruch 11, **dadurch gekennzeichnet, dass** die beiden Array-Prüfköpfe (10, 11) derart mechanisch miteinander verbunden sind, dass der Abstand zwischen den Array-Prüfköpfe (10, 11) variierbar ist.

13. Ultraschall-Prüfgerät für die zerstörungsfreie Prüfung eines Prüfkörpers (18) nach Anspruch 11 oder Anspruch 12, **dadurch gekennzeichnet, dass** die beiden Array-Prüfköpfe (10, 11) in einer Rahmenkonstruktion (40) angeordnet sind.

14. Ultraschall-Prüfgerät für die zerstörungsfreie Prüfung eines Prüfkörpers (18) nach einem der Ansprüche 11 bis 13, **dadurch gekennzeichnet, dass** der Abstand zwischen den Array-Prüfköpfen (10, 11) permanent elektronisch ermittelt und der Betrag zur weiteren Berechnung an die elektronische Einheit (13) weitergegeben wird.

15. Ultraschall-Prüfgerät für die zerstörungsfreie Prüfung eines Prüfkörpers (18) nach einem der Ansprüche 10 bis 14 **dadurch gekennzeichnet, dass** der Prüfkopf fest mit einem Mittel (38) verbunden ist, das dazu dient, die jeweilige Position des Winkelprüfkopfs (10) auf der Oberfläche des Prüfkörpers (18) zu ermitteln.

## Claims

1. A method for the presentation of ultrasonic signals obtained by means of an ultrasonic testing device for the non-destructive testing of a test body (18), the ultrasonic testing device comprising at least a first array test probe (10) and a second array test probe (11), each having several individual transmitters generating transmission pulses, and each having several receivers receiving ultrasonic signals, comprising the method steps:
- placing the array test probes (10, 11) on a coupling surface (22) of the test body (18), with a region to be tested of the test body (18) being located between the two array test probes (10, 11),
- insonifying ultrasonic pulses with the first array test probe (10) at certain angles (a) into the test body (18),
- receiving ultrasonic signals by means of the first array test probes (10),
- finding a flaw (36) by means of the first array test probe (10) and growing a flaw signal (40) from a first insonification direction (a) in which the flaw (36) was found,
- calculating at least three other insonification positions and directions (b, c, d) of the two array test probes (10, 11) based on the known wall thickness (34) of the test body (18) and the known angle (a) of the first insonification direction (a), wherein the at least three other insonification positions and insonification directions are calculated in such a way that the overall result is two direct sound paths (a, c) to the flaw (36) and two indirect sound paths (b, d) to the flaw (36) via a reflection on the back wall (24) of the test body (18),
- insonifying and receiving ultrasonic pulses with both array test probes (10, 11) in the at least four insonification directions (a, b, c, d),
- determining the extent of the flaw (36) based on transit times and amplitudes of the insonification directions (a, b, c, d).

2. The method according to claim 1, **characterised in that** four transit time values and four amplitude values are evaluated.

3. The method according to claim 1 or claim 2, **characterised in that** the flaw (36) is irradiated with sound from further insonification positions.

4. The method according to any one of the claims 1 to 3, **characterised in that** the insonification positions vary transverse to the flaw (36).

5. The method according to any one of the claims 1 to 4, **characterised in that** the insonification positions vary longitudinally to the flaw (36).

6. The method according to any one of the claims 1 to 5, **characterised in that** the flaw (36) is presented to scale in an evaluation image on the display (14) of a monitor (12).

7. The method according to any one of the claims 1 to 6, **characterised in that** the evaluation image contains a cross-sectional image (38) and that at least one coupling surface (22) and a back wall (24) of the test body (18) is recognizable.

8. The method according to any one of the claims 1 to 7, **characterised in that**, in the case of an inspection of a weld seam (20), this is also shown.

9. The method according to any one of the claims 1 to 8, **characterised in that** the respective position of the angle test probe (10) on the surface of the test body (18) is determined permanently.

10. An ultrasonic testing device for a non-destructive testing of a test body (18), comprising
- at least a first array test probe (10) and a second array test probe (11), each having several individual transmitters generating transmission pulses, and each having several receivers receiving ultrasonic signals,
- an electronic unit connected to the array test probes (10, 11) and comprising a processor for controlling the emission of the transmission pulses and for the calculation and evaluation of the received ultrasonic signals as well as for providing data for the presentation of results, the electronic unit being adapted to carry out a method according to claim 1.

11. The ultrasonic testing device for the non-destructive testing of a test body (18) according to claim 10, **characterised in that** the two array test probes (10, 11) are mechanically interconnected.

12. The ultrasonic testing device for the non-destructive testing of a test body (18) according to claim 11, **characterised in that** the two array test probes (10, 11) are mechanically interconnected in such a way that the distance between the array test probes (10, 11) can be varied.

13. The ultrasonic testing device for the non-destructive testing of a test body (18) according to claim 11 or claim 12, **characterised in that** the two array test probes (10, 11) are disposed in a frame structure (40).

14. The ultrasonic testing device for the non-destructive testing of a test body (18) according to any one of the claims 11 to 13, **characterised in that** the distance between the array test probes (10, 11) is permanently electronically determined and the amount is forwarded to the electronic unit (13) for further calculation.

15. The ultrasonic testing device for the non-destructive testing of a test body (18) according to any one of the claims 10 to 14, **characterised in that** the test probe is firmly connected to a means (38) serving for determining the respective position of the angle test probe (10) on the surface of the test body (18).

## Revendications

1. Procédé de représentation de signaux ultrasonores qui sont obtenus à l'aide d'un appareil de contrôle par ultrasons pour le contrôle non-destructif d'une éprouvette (18), ledit appareil de contrôle par ultrasons présentant au moins un premier palpeur à réseau (10) et un deuxième palpeur à réseau (11) ayant chacun une pluralité d'émetteurs individuels qui génèrent des impulsions d'émission ainsi que chacun une pluralité de récepteurs qui reçoivent des signaux ultrasonores, comprenant les étapes de procédé :
- poser lesdits palpeurs à réseau (10, 11) sur une surface de couplage (22) de ladite éprouvette (18), une zone à contrôler de l'éprouvette (18) étant située entre les deux palpeurs à réseau (10, 11),
- émettre des impulsions ultrasonores par ledit premier palpeur à réseau (10), à des angles déterminés (a), dans ladite éprouvette (18),
- recevoir des signaux ultrasonores à l'aide dudit premier palpeur à réseau (10),
- retrouver un défaut (36) à l'aide du premier palpeur à réseau (10) et cultiver un signal de défaut (40) à partir d'une première direction d'irradiation acoustique (a) dans laquelle le défaut (36) à été retrouvé,
- calculer au moins trois autres positions et directions d'irradiation acoustique (b, c, d) des deux palpeurs à réseau (10, 11) sur la base de l'épaisseur de paroi (34) connue de l'éprouvette (18) et de l'angle (a) connu de la première direction d'irradiation acoustique (a), lesdites au moins trois autres positions d'irradiation acoustique et directions d'irradiation acoustique étant calculées de manière à ce que l'on obtienne, dans l'ensemble, deux trajectoires acoustiques directes (a, c) vers le défaut (36) et deux trajectoires acoustiques indirectes (b, d) vers le défaut (36) par une réflexion sur la paroi arrière (24) de ladite éprouvette (18),
- émettre et recevoir des impulsions ultrasonores par les deux palpeurs à réseau (10, 11) dans lesdites au moins quatre directions d'irradiation acoustique (a, b, c, d),
- déterminer l'extension du défaut (36) sur la base de temps de propagation et d'amplitudes des directions d'irradiation acoustique (a, b, c, d).

2. Procédé selon la revendication 1, **caractérisé par le fait que** quatre valeurs de temps de propagation et quatre valeurs d'amplitude sont évaluées.

3. Procédé selon la revendication 1 ou la revendication 2, **caractérisé par le fait que** ledit défaut (36) est exposé à des ultrasons à partir d'autres positions d'irradiation acoustique.

4. Procédé selon l'une quelconque des revendications 1 à 3, **caractérisé par le fait que** les positions d'irradiation acoustique varient transversalement au défaut (36).

5. Procédé selon l'une quelconque des revendications 1 à 4, **caractérisé par le fait que** les positions d'irradiation acoustique varient longitudinalement par rapport au défaut (36).

6. Procédé selon l'une quelconque des revendications 1 à 5, **caractérisé par le fait que** le défaut (36) est représenté à l'échelle dans une image d'évaluation sur l'affichage (14) d'un écran (12).

7. Procédé selon l'une quelconque des revendications 1 à 6, **caractérisé par le fait que** l'image d'évaluation contient une image de section transversale (38) et que l'on reconnaît au moins une surface de couplage (22) et une paroi arrière (24) de ladite éprouvette (18).

8. Procédé selon l'une quelconque des revendications 1 à 7, **caractérisé par le fait que**, lorsqu'on examine une soudure (20), celle-ci est représentée elle aussi.

9. Procédé selon l'une quelconque des revendications 1 à 8, **caractérisé par le fait que** la position respective du palpeur angulaire (10) sur la surface de l'éprouvette (18) est déterminée en permanence.

10. Appareil de contrôle par ultrasons pour un contrôle non-destructif d'une éprouvette (18), comprenant
- au moins un premier palpeur à réseau (10) et un deuxième palpeur à réseau (11) qui présentent chacun une pluralité d'émetteurs individuels qui génèrent des impulsions d'émission ainsi que chacun une pluralité de récepteurs qui reçoivent des signaux ultrasonores,
- une unité électronique qui est reliée auxdits palpeurs à réseau (10, 11) et comprend un processeur pour commander l'émission des impulsions d'émission et pour calculer et évaluer les signaux ultrasonores reçus ainsi que pour fournir des données de représentation de résultats, ladite unité électronique étant adaptée pour mettre en oeuvre un procédé selon la revendication 1.

11. Appareil de contrôle par ultrasons pour le contrôle non-destructif d'une éprouvette (18), selon la revendication 10, **caractérisé par le fait que** lesdits deux palpeurs à réseau (10, 11) sont reliés mécaniquement entre eux.

12. Appareil de contrôle par ultrasons pour le contrôle non-destructif d'une éprouvette (18), selon la revendication 11, **caractérisé par le fait que** lesdits deux palpeurs à réseau (10, 11) sont reliés mécaniquement entre eux de telle manière que la distance séparant les palpeurs à réseau (10, 11) puisse être variée.

13. Appareil de contrôle par ultrasons pour le contrôle non-destructif d'une éprouvette (18), selon la revendication 11 ou la revendication 12, **caractérisé par le fait que** lesdits deux palpeurs à réseau (10, 11) sont disposés dans une construction en cadre (40).

14. Appareil de contrôle par ultrasons pour le contrôle non-destructif d'une éprouvette (18), selon l'une quelconque des revendications 11 à 13, **caractérisé par le fait que** la distance séparant lesdits palpeurs à réseau (10, 11) est déterminée en permanence électroniquement et que la valeur est transmise à ladite unité électronique (13) pour le calcul ultérieur.

15. Appareil de contrôle par ultrasons pour le contrôle non-destructif d'une éprouvette (18), selon l'une quelconque des revendications 10 à 14, **caractérisé par le fait que** le palpeur est solidaire d'un moyen (38) qui sert à déterminer la position respective du palpeur angulaire (10) sur la surface de ladite éprouvette (18).
